# EUROPÄISCHE PATENTSCHRIFT

(11) **EP 1 240 114 B1**
(45) Veröffentlichungstag und Bekanntmachung des Hinweises auf die Patenterteilung: **07.12.2005**
(21) Anmeldenummer: 00993506.5
(22) Anmeldetag: 14.12.2000
(51) Int. Cl.: C03C 3/06, C03C 1/02, C03B 19/10

(54) **VERFAHREN FÜR DIE HERSTELLUNG VON OPAKEM QUARZGLAS, FÜR DIE DURCHFÜHRUNG DES VERFAHRENS GEEIGNETES SiO2-GRANULAT UND BAUTEIL AUS OPAKEM QUARZGLAS**
METHOD FOR THE PRODUCTION OF OPAQUE QUARTZ GLASS, SIO2 GRANULATE SUITABLE FOR USE IN PERFORMING THE METHOD AND A COMPONENT MADE OF OPAQUE QUARTZ GLASS
PROCEDE DE FABRICATION DE VERRE DE QUARTZ OPAQUE, GRANULES DE SiO2 ADAPTES A LA REALISATION DU PROCEDE ET ELEMENT EN VERRE DE QUARTZ OPAQUE

(30) Priorität: 22.12.1999 DE 19962451
(43) Veröffentlichungstag der Anmeldung: 18.09.2002
(73) Patentinhaber: Heraeus Quarzglas GmbH & Co. KG, 63450 Hanau (DE)
(72) Erfinder: WERDECKER, Waltraud, 63456 Hanau (DE); FABIAN, Heinz, 63762 Grossostheim (DE); GERTIG, Udo, 63867 Johannesberg (DE); LEIST, Johann, 63674 Altenstadt (DE); GÖBEL, Rolf, 63571 Gelnhausen (DE)
(86) Internationale Anmeldenummer: PCT/EP2000/012687
(87) Internationale Veröffentlichungsnummer: WO 2001/046079

(56) Entgegenhaltungen:
- EP-A- 0 890 555
- US-A- 3 532 473
- US-A- 5 643 347
- PATENT ABSTRACTS OF JAPAN vol. 1996, no. 03, 29. März 1996 (1996-03-29) & JP 07 300341 A (SHINETSU QUARTZ PROD CO LTD), 14. November 1995 (1995-11-14)

## Beschreibung

Die Erfindung betrifft ein Verfahren für die Herstellung von opakem Quarzglas, wobei ein Formling aus synthetischer SiO₂-Körnung geformt und bei einer Verglasungstemperatur unter Bildung eines Formkörpers aus opakem Quarzglas erhitzt wird.

Weiterhin betrifft die Erfindung ein für die Durchführung des Verfahrens geeignetes synthetisches SiO₂-Granulat, das aus mindestens teilweise porösen Agglomeraten von SiO₂-Primärteilchen gebildet ist.

Opakes Quarzglas wird im wesentlichen zur Herstellung von Formkörpern für wärmetechnische Anwendungen eingesetzt, bei denen es auf gute Wärmeisolierung bei gleichzeitig hoher Temperatustabilität ankommt. Dabei werden zunehmend höhere Anforderungen an die Reinheit derartiger Quarzglas-Formkörper gestellt. Als Beispiel seien Anwendungen in der Halbleiterindustrie in Form von Reaktoren, Diffusionsrohren, Hitzeschilden, Glocken oder Flanschen genannt. Für diese Anwendungen ist vorallem eine Opazität im infraroten Spektralbereich erforderlich. Opazität bedeutet hier also eine niedrige Transmission (kleiner ein Prozent) sowohl im Sichtbaren (etwa zwischen 350 nm und 800 nm) als auch im IR-Bereich (etwa von 750 nm bis 4800 nm). Bei Quarzglas geringer Reinheit tritt durch die darin enthaltenen Verunreinigungen die gewünschten Opazität von alleine ein. Demgegenüber wird bei Einsatz reiner Ausgangsstoffe transparentes Quarzglas erhalten, so daß die Opazität der Formkörper durch künstlich eingebrachte Poren erzeugt werden muß. Die Herstellung von opakem Quarzglas aus reinen Ausgangsstoffen ist Gegenstand dieser Erfindung.

Ein gattungsgemäßes Verfahren zur Herstellung von opakem Quarzglas aus reinen Ausgangsstoffen ist in der EP-A1 816 297 beschrieben. Darin wird vorgeschlagen, die Opazität des Quarzglases zu erzeugen, indem ein Pulvergemisch aus synthetisch hergestellten SiO₂-Partikeln mit einer mittleren Partikelgröße von 300 µm und einem Zusatzmittel in Form von Siliziumnitrid-Pulver hergestellt und erschmolzen wird. Beim Schmelzen der Pulvermischung werden durch thermische Zersetzung des Si₃N₄-Pulvers gasförmige Komponenten, wie Stickstoff, freigesetzt. Die gasförmigen Komponenten führen zu Porenbildung im erweichten Quarzglas und erzeugen so die gewünschte Opazität des Formkörpers. Zur Herstellung des Formkörpers wird die Pulvermischung in einer mit Graphitfilz ausgekleideten Graphitform gefüllt und in einem elektrisch beheizten Ofen bei einer Temperatur von 1800 °C unter Vakuum erhitzt. Beim Schmelzen wandert die Front des sich erweichenden und schmelzenden Quarzglases als "Schmelzfront" von der Formwandung aus radial nach innen.

Durch Verunreinigungen können Entglasungen des Quarzglases entstehen, die zu Sprödigkeit und verminderter Temperaturwechselbeständigkeit führen. Auch Reste des Zusatzmittels können die Qualität des Quarzglases in dieser Hinsicht beeinträchtigen. Schädlich ist auch eine inhomogene Porenverteilung. Während des Verglasens kann ein Porenwachstum auftreten, bei dem größere Poren auf Kosten kleinerer Poren wachsen. Große Poren tragen jedoch nur wenig zur Opazität bei, führen zu eine geringen Dichte des opaken Quarzglases und mindern die mechanische Festigkeit des Quarzglas-Fromkörpers.

Ein gattungsgemäßes SiO₂-Granulat ist aus der DE-A1 44 24 044 bekannt. Darin wird vorgeschlagen, eine wäßrige Suspension pyrogen hergestellten Kieselsäurepulvers in einem Mischbehälter mit rotierendem Wirblerwerkzeug zu behandeln, dessen Umfangsgeschwindigkeit während einer ersten Mischphase auf einen Wert im Bereich von 15 m/s bis 30 m/s, und in einer zweiten Mischphase auf 30 m/s oder mehr eingestellt wird. In der ersten Mischphase beträgt der Feststoffgehalt der Suspension mindestens 75 Gew.-%, woraus nach der ersten Mischphase eine kömige Masse mit einem mittleren Komdurchmesser von weniger als 4 mm entsteht. Der Verdichtungsgrad der körnigen Masse wird weiter erhöht, indem amorpher Kieselsäurestaub hinzugegeben und in der zweiten Mischphase die kömige Masse unter intensiver Misch- und Schlagbeanspruchung zerkleinert wird. Dabei tritt gleichzeitig Wasser aus der Oberfläche der körnigen Masse aus, das durch Zugabe von weiterem Kieselsäurepulver abgepudert wird, um ein Verkleben der Körnung zu verhindern. Das bekannte Verfahren führt zu einem rieselfähigen SiO₂-Granulat mit hoher Schüttdichte, das sich für Anwendungen als Füllstoff im Dentalbereich oder als Katalysatorträger eignet.

Der Erfindung liegt die Aufgabe zugrunde, ein Verfahren für die Herstellung von reinem, opakem Quarzglas anzugeben, das eine homogene Porenverteilung bei gleichzeitig hoher Dichte, eine hohe Viskosität und eine geringe Entglasungsneigung hat, und ein für die Durchführung des Verfahrens geeignetes SiO₂-Granulat bereitzustellen.

Hinsichtlich des Verfahrens wird diese Aufgabe ausgehend von einem in Anspruch 1 genannten Verfahren gelöst.

Durch Verglasen eines Formlings nach den Maßgaben des Verfahrens gemäß Anspruch 1 wird opakes, reines Quarzglas erhalten, das eine homogene Porenverteilung bei gleichzeitig hoher Dichte, eine hohe Viskosität und eine geringe Entglasungsneigung aufweist. Ein aus dem opaken Quarzglas hergestelltes Bauteil zeichnet sich durch gute Wärmeisolierung und eine lange Standzeit bei hoher Temperatur aus.

Das SiO₂-Granulat liegt in Form von mindestens teilweise porösen Agglomeraten von SiO₂-Primärteilchen vor. Derartige Primärteilchen werden beispielsweise durch Flammenhydrolyse oder Oxidation von Siliziumverbindungen, durch Hydrolyse organischer Siliziumverbindungen nach dem sogenannten Sol-Gel-Verfahren oder durch Hydrolyse anorganischer Siliziumverbindungen in einer Flüssigkeit erhalten. Zwar zeichnen sich derartige Primärteilchen durch hohe Reinheit aus; sie lassen sich wegen ihrer geringen Schüttdichte aber nur schwer handhaben. Zu diesem Zweck ist eine Verdichtung mittels Granulierverfahren gebräuchlich. Beim Granulieren bilden sich durch Zusammenlagerungen der feinteiligen Primärteilchen Agglomerate mit größerem Durchmesser. Diese weisen eine Vielzahl offener Porenkanäle auf, die einen dementsprechend großen Porenraum bilden. Die einzelnen Körner des für die Durchführung des erfindungsgemäßen Verfahrens eingesetzten SiO₂-Granulats werden aus derartigen Agglomeraten gebildet. Das Granulat zeichnet sich aufgrund des großen Porenraumes durch eine spezifische Oberfläche (nach BET) zwischen 10 m²/g und 34 m²/g aus. Diese tritt somit nicht als Außenoberfläche, sondern überwiegend als Innenoberfläche in Form von Porenkanälen in Erscheinung. Beim Verglasen des Formlings schließt sich der größte Teil des Porenraums durch Sintern und Kollabieren. Von den vorher offenen Porenkanälen bleibt jedoch eine Vielzahl feiner, geschlossener Poren, an denen einfallendes Licht gestreut wird, was Opazität bzw. niedrige Transmission erzeugt. Die große Oberfläche begünstigt die Bildung von gasförmigem Siliziummonoxid (SiO) beim Verglasen, was einem Kollabieren kleiner Poren entgegenwirkt, da in geschlossenen Poren eingeschlossene Gase nicht mehr entweichen können.

Eine Zugabe eines beim Verglasen volatilen Zusatzstoffes zur Erzeugung der Opazität - wie beim eingangs beschriebenen, bekannten Verfahren - ist daher nicht erforderlich. Somit können die mit dem Einsatz eines derartigen Zusatzstoffes einhergehenden Verunreinigungen des Quarzglases vermieden werden.

Das erfindungsgemäß eingesetzte, synthetisch hergestellte SiO₂-Granulat zeichnet sich durch eine spezifische Oberfläche zwischen 10 m²/g und 34 m²/g bei gleichzeitig hoher Stampfdichte aus. Die Stampfdichte von 0,9 g/cm³ - 1,1 g/cm³ gewährleistet in erster Linie, daß aus dem SiO₂-Granulat der Formling gebildet werden kann, während die Opazität des Quarzglases - wie oben erläutert - im wesentlichen durch die große spezifische Oberfläche, die als innere Oberfläche ausgebildet ist, bedingt ist.

Die spezifische Oberfläche des SiO₂-Granulats wird nach dem BET-Verfahren (DIN 66132) und die Stampfdichte nach DIN/ISO 787 Teil 11 ermittelt.

Der Formling wird als lose Schüttung oder als mechanisch oder thermisch vorverdichteter, poröser Körper aus dem SiO₂-Granulat gebildet.

SiO₂-Granulat mit einer spezifischen Oberfläche (nach BET) im Bereich zwischen 10 und 30 m²/g hat sich als besonders geeignet für den Einsatz im erfindungsgemäßen Verfahren erwiesen. Damit werden gute Ergebnisse hinsichtlich der Opazität bzw. der niedrigen Transmission des Quarzglases - insbesondere im infraroten Spektralbereich -bei hoher Dichte und gleichzeitig geringer Entglasungsneigung erreicht.

In einer bevorzugten Verfahrensvariante liegen die SiO₂-Primärteilchen mit einer mittleren Teilchengröße im Bereich von 0,5 µm und 5 µm vor. Derartige Primärteilchen werden beim sogenannten "Sol-Gel-Verfahren" durch Hydrolyse organischer Siliziumverbindungen erhalten. In einer alternativen und gleichermaßen bevorzugten Verfahrensvariante liegen die SiO₂-Primärteilchen mit einer mittleren Teilchengröße unterhalb von 0,2 µm vor. Derartige, pyrogene Primärteilchen werden durch Flammenhydrolyse oder Oxidation anorganischer Siliziumverbindungen gebildet. Im Hinblick auf eine geringe Entglasungsneigung beim Verglasen sind die Primärteilchen vorzugsweise amorph.

Bei beiden Verfahrensvarianten zeichnen sich die Primärteilchen durch eine große freie Oberfläche aus. Durch Agglomeration einer Vielzahl derartiger Primärteilchen aufgrund physikalischer oder chemischer Bindungskräfte werden die Granulate im Sinne der Erfindung gebildet. Für die Granulation werden die bekannten Granulierverfahren eingesetzt, insbesondere Aufbaugranulation (Naßgranulierverfahren) oder Preßgranulation (Extrusion) einer die Primärteilchen enthaltenden Masse. Insbesondere die nach dem Sol-Gel-Verfahren hergestellten Primärteilchen liegen im Granulat in dichter Packung vor, da diese überwiegend und auch vorzugsweise sphärische Form haben. Die freie Oberfläche wird um die Kontaktflächen aneinandergrenzender Primärteilchen verringert; jedoch können sich zwischen den einzelnen Primärteilchen - wie oben erläutert - beim Verglasen geschlossene Poren ausbilden. Dadurch, daß die Primärteilchen eine mittlere Teilchengröße von weniger als 5 µm haben, ergibt sich eine entsprechend feine Porenverteilung. Die mittlere Teilchengröße wird als sogenannter D₅₀-Wert nach ASTM C1070 ermittelt.

Als besonders geeignet für den Einsatz beim erfindungsgemäßen Verfahren hat sich ein Granulat erwiesen, bei dem die einzelnen SiO₂-Körner eine inhomogene Dichteverteilung aufweisen, wobei ein Innenbereich geringerer Dichte mindestens teilweise von einem Außenbereich höherer Dichte umschlossen ist. Dadurch gelingt es Gase, im Innenbereich einzuschließen, die dann während des Verglasens nicht oder nur zum Teil entweichen und so zu Porenbildung und Opazität (niedrige Transmission) des Quarzglases beitragen.

In einer bevorzugten Verfahrensweise werden Granulate eingesetzt, bei denen der Innenbereich einen Hohlraum umfaßt. Der Hohlraum ist von dem Außenbereich.höherer Dichte wenigstens teilweise nach außen abgeschlossen.

Der Außenbereich poröser Granulate wird dabei vorteilhafterweise durch thermische Behandlung, vorverdichtet, die ein Sintern bei einer Temperatur im Bereich von 800°C bis 1350°C umfaßt. Durch die thermische Behandlung erhält der Außenbereich eine Dichte, die höher ist als die des porösen oder hohlen Innenbereichs, so daß sich Poren und Porenkanäle bevorzugt im Außenbereich verringern und schließen. Hierzu wird die thermische Behandlung beendet oder unterbrochen, bevor der sich anfänglich einstellende Temperaturgradient zwischen Außenbereich und Innenbereich ausgeglichen ist. Dies läßt sich beispielsweise auf einfache Weise dadurch realisieren, daß das Granulat im Durchlauf durch eine Heizzone geführt wird.

Als günstig hat sich eine Verfahrensweise erwiesen, bei der die thermische Behandlung ein Erhitzen in chlorhaltiger Atmosphäre umfaßt. Durch die Behandlung in chlorhaltiger Atmosphäre werden Verunreinigungen, die bei der Behandlungstemperatur flüchtige Chlorverbindungen bilden, und OH-Gruppen entfernt. Die Reinheit des opaken Quarzglases wird somit verbessert, die Viskosität erhöht und die Entglasungsneigung weiter gesenkt. Die chlorhaltige Atmosphäre enthält Chlor und/oder eine Chlorverbindung. Bei einem im Sinne der Erfindung reinen Quarzglas beträgt die Gesamtheit der Verunreinigungen an Li, Na, K, Mg, Ca, Fe, Cu, Cr, Mn, Ti, und Zr insgesamt weniger als 250 Gew.-ppb. Dotierstoffe sind keine Verunreinigungen in diesem Sinn.

In einer bevorzugten Verfahrensweise umfaßt die thermische Behandlung ein Erhitzen der porösen Agglomerate bei einer Temperatur zwischen 1000°C und 1300°C unter stickstoffhaltiger Atmosphäre und in Gegenwart von Kohlenstoff. Durch diese - im folgenden als "carbothermische Nitridierung" bezeichnete - Verfahrensvariante werden Granulat-Körner erhalten, an deren gesamter freier Oberfläche Stickstoff angereichert ist. Der Stickstoffeinbau wird in Gegenwart von Kohlenstoff erleichtert, der sich jedoch verflüchtigt. Es hat sich gezeigt, daß durch den Einbau von Stickstoff die Viskosität von Quarzglas erhöht wird. Eine hohe Viskosität wird auch durch ein Granulat erreicht, das aus SiO₂-Körnern besteht, die im Bereich zwischen 5 Gew.-ppm und 20 Gew.-ppm mit Aluminium dotiert sind. Dabei wird Aluminium-Dotierung vorteilhafterweise durch feinverteilte, nanoskalige Al₂O₃-Partikel erzeugt. Dadurch wird ein homogene Verteilung des Dotierstoffs gewährleistet. Pyrogen hergestellte Al₂O₃-Partikel sind aufgrund ihrer hohen spezifischen Oberfläche hierfür besonders gut geeignet.

Bei einem Einsatz von SiO₂-Granulat aus Körnern mit einer mittleren Korngröße im Bereich von 150 µm bis 2000 µm, hat es sich als günstig erwiesen, den Feinanteil von Körnern mit einer Korngröße unterhalb von 100 µm zu vermeiden. Hierzu werden Körner mit einer Korngröße unterhalb von 100 µm aus dem Granulat entfernt, oder ihre Bildung wird bereits bei der Herstellung des Granulats unterdrückt. In einem gröberen Granulat-Korn bildet sich während des Verglasens des Formlings oder bei einer thermischen Behandlung zur Vorverdichtung des Granulats ein Temperaturgradient aus, der zu einem Dichtegradienten innerhalb des Korns mit höherer Verdichtung im Außenbereich führt und damit die Porenbildung beim Verglasen begünstigt, wie oben erläutert. Die geringe Größe feiner Körner erschwert oder verhindert hingegen die Ausbildung eines derartigen Dichtegradienten, so daß der Feinanteil zur Porenbildung nicht beträgt. Darüberhinaus beeinflußt der Feinanteil die Schrumpfung des Quarzglases beim Kollabieren der Porenkanäle und erschwert, indem er zum Aufwirbeln neigt, die Einhaltung vorgegebener Maße.

Vorteilhafterweise wird ein Formling gebildet, der eine um eine Rotationsachse verlaufende Innenoberfläche aufweist, wobei das Erhitzen des Formlings derart erfolgt, daß eine Verglasungsfront von der Innenoberflächen nach außen fortschreitet. Bei der Verglasungsfront handelt es sich um einen unscharfen Grenzbereich zwischen geschmolzenem und angeschmolzenen Material. Im angeschmolzenen Material liegen offene Poren und Kanäle vor, während das geschmolzenen Material geschlossene Poren aufweist, die nicht mehr mit der Außenoberfläche verbunden sind. Der Formling wird von der Innenoberfläche aus erhitzt, so daß die Verglasungsfront von dort durch die Wandung des Formlings nach außen wandert. Sublimierbare Verunreinigungen werden dabei in die Gasphase überführt und vor der Verglasungsfront nach außen, in Richtung noch poröser Bereiche des Formlings getrieben, wo sie entweichen oder abgesaugt werden können.

Dabei hat es sich als günstig erweisen, den Formling unter Rotation um die Rotationsachse von der Innenoberfläche aus mittels eines Lichtbogens auf eine Verglasungstemperatur oberhalb von 1900 °C zu erhitzen. Die Rotation gewährleistet ein gleichmäßiges Erhitzen des Formlings, Temperaturspitzen und Dichteunterschiede werden so vermieden. Beim Erhitzen in einem Lichtbogen wird der Formling besonders hohen Temperaturen oberhalb von 1900°C ausgesetzt. Infolge der hohen Temperaturen laufen Diffusions- und andere Stoffaustauschvorgänge beschleunigt ab. Verunreinigungen, insbesondere gasförmige Verunreinigungen, lassen sich dadurch wirkungsvoll beseitigen, indem sie expandieren und vor der Verglasungsfront nach außen entweichen.

Hinsichtlich des synthetischen SiO₂-Granulat für die Durchführung des Verfahrens wird ein Granulat nach Anspruch 6 verwendet.

Das SiO₂-Granulat liegt in Form von mindestens teilweise porösen Agglomeraten von SiO₂-Primärteilchen vor. Derartige Primärteilchen werden beispielsweise durch Flammenhydrolyse - oder Oxidation von Siliziumverbindungen, durch Hydrolyse organischer Siliziumverbindungen nach dem sogenannten Sol-Gel-Verfahren oder durch Hydrolyse anorganischer Siliziumverbindungen in einer Flüssigkeit erhalten. Zwar zeichnen sich derartige Primärteilchen durch hohe Reinheit aus; sie lassen sich wegen ihrer geringen Schüttdichte aber nur schwer handhaben. Zu diesem Zweck ist eine Verdichtung mittels Granulierverfahren gebräuchlich. Beim Granulieren bilden sich durch Zusammenlagerungen der feinteiligen Primärteilchen Agglomerate mit größerem Durchmesser. Diese weisen eine Vielzahl offener Porenkanäle auf, die einen dementsprechend großen Porenraum bilden. Aus derartigen Agglomeraten sind die einzelnen Körner des erfindungsgemäßen SiO₂-Granulat aufgebaut.

Das erfindungsgemäße synthetisch hergestellte SiO₂-Granulat zeichnet sich somit durch eine spezifische Oberfläche von 10 m²/g bis 34 m²/g bei gleichzeitig hoher Stampfdichte aus. Die spezifische Oberfläche tritt nicht als Außenoberfläche, sondern überwiegend als Innenoberfläche in Form von Porenkanälen in Erscheinung und erzeugt bei einem Einsatz zur Herstellung von opakem Quarzglas eine Opazität (niedrige Transmission) sowohl im sichtbaren Spektralbereich - und insbesondere auch im infraroten Spektralbereich. Die Stampfdichte von 0,9 g/cm³ bis 1,1 g/cm³ gewährleistet in erster Linie, daß aus dem SiO₂-Granulat ein Formling gebildet werden kann.

Die spezifische Oberfläche des SiO₂-Granulats wird nach dem BET-Verfahren (DIN 66132) und die Stampfdichte nach DIN/ISO 787 Teil 11 ermittelt.

Einzelheiten zu den Eigenschaften und Wirkungen des erfindungsgemäßen SiO₂-Granulats in Bezug auf die Opazität des unter Einsatz des Granulats hergestellten Quarzglases ergeben sich anhand der obigen Erläuterungen zum erfindungsgemäßen Verfahren.

SiO₂-Granulat mit einer spezifischen Oberfläche (nach BET) im Bereich zwischen 10 m²/g und 30 m²/g hat sich als besonders geeignet für den Einsatz beim erfindungsgemäßen Verfahren erwiesen. Damit werden gute Ergebnisse hinsichtlich der Opazität des Quarzglases bei hoher Dichte und gleichzeitig geringer Entglasungsneigung erreicht.

Bevorzugt haben die SiO₂-Primärteilchen eine mittlere Teilchengröße im Bereich von 0,5 µm bis 5 µm vor. Derartige Primärteilchen werden beim sogenannten "Sol-Gel-Verfahren" aus organischen Siliziumverbindungen erhalten. Alternativ und gleichermaßen bevorzugt liegen die SiO₂-Primärteilchen mit einer mittleren Teilchengröße unterhalb von 0,2 µm vor. Derartige pyrogene Primärteilchen werden durch Flammenhydrolyse oder Oxidation anorganischer Siliziumverbindungen gebildet.

Die Primärteilchen zeichnen sich jeweils durch eine große freie Oberfläche aus. Durch Agglomeration einer Vielzahl derartiger Primärteilchen aufgrund physikalischer oder chemischer Bindungskräfte werden die erfindungsgemäßen Granulate gebildet. Für die Granulation werden die bekannten Granulierverfahren eingesetzt, insbesondere Aufbaugranulation und Preßgranulation (wie z.B. Extrusion). Insbesondere die nach dem Sol-Gel-Verfahren hergestellten Primärteilchen liegen im Granulat in dichter Packung vor, da diese überwiegend und auch vorzugsweise sphärische Form haben, die eine hohe Schüttdichte bewirkt. Die freie Oberfläche wird um die Kontaktflächen aneinandergrenzender Primärteilchen verringert; jedoch können sich zwischen den einzelnen Primärteilchen - wie oben erläutert - beim Verglasen geschlossene Poren ausbilden. Dadurch, daß die Primärteilchen eine mittlere Teilchengröße von weniger als 5 µm haben, ergibt sich eine entsprechend feine Porenverteilung. Die mittlere Teilchengröße wird als sogenannter D₅₀-Wert nach ASTM C1070 ermittelt.

Als besonders geeignet für den Einsatz beim erfindungsgemäßen Verfahren hat sich eine Ausführungsform des erfindungsgemäßen Granulats erwiesen, bei dem die einzelnen SiO₂-Körner eine inhomogene Dichteverteilung aufweisen, wobei ein Innenbereich geringerer Dichte mindestens teilweise von einem Außenbereich höherer Dichte umschlossen ist. Dies erleichtert es, Gase im Innenbereich einzuschließen, die dann während des Verglasens nicht oder nur zum Teil entweichen und so zu Porenbildung und Opazität des Quarzglases führen.

Vorzugsweise umfaßt der Innenbereich des Aggregats einen Hohlraum. Der Hohlraum ist von dem Außenbereich höherer Dichte wenigstens teilweise nach außen abgeschlossen.

Die spezifische Oberfläche und die Stampfdichte des SiO₂-Granulats werden besonders einfach durch thermische Behandlung, die ein Sintern bei einer Temperatur im Bereich von 800°C bis 1450 °C umfaßt, eingestellt. Dabei kann auch eine höhere Dichte im Außenbereich erhalten werden. Zum Beispiel dadurch, daß bei der thermischen Behandlung ein Temperaturgradient eingestellt wird. Durch Einstellen eines Temperaturgradienten schrumpfen die Poren und Porenkanäle bevorzugt im oberflächennahen Volumenanteil der einzelnen Körner, also im Außenbereich. Dieser erhält somit eine Dichte, die höher ist als die des porösen oder hohlen Innenbereichs. Die thermische Behandlung der SiO₂-Körner wird beendet oder unterbrochen, bevor der sich anfänglich einstellende Temperaturgradient zwischen Außenbereich und Innenbereich ausgeglichen ist. Dies läßt sich beispielsweise auf einfache Weise dadurch realisieren, daß das Granulat im Durchlauf durch eine Heizzone geführt wird. Ein derartiger Temperaturgradient läßt sich bei gröberen Körnern einfacher einstellen als bei feinen Körnern, wie weiter unten näher erläutert wird.

Im Hinblick auf eine hohe thermische Beständigkeit des aus dem Granulat herzustellenden Quarzglases wird SiO₂-Granulat bevorzugt, das zu einer hohen Viskosität beiträgt. Dies wird durch ein Granulat erreicht, bei dem die Primärteilchen eine stickstoffhaltige Oberflächenschicht aufweisen. Dadurch ist es möglich, Stickstoff zum einen in chemisch gebundener Form in das aus dem Granulat herzustellende Quarzglas einzubringen, was zur Erhöhung der Viskosität führt. Zum anderen wird lose gebundener Stickstoff beim Erhitzen freigesetzt und trägt so zur Porenbildung bei.

Eine hohe Viskosität wird auch durch ein Granulat erreicht, das aus SiO₂-Körnern besteht, die im Bereich zwischen 5 Gew.-ppm und 20 Gew.-ppm mit Aluminium dotiert sind. Dabei wird Aluminium-Dotierung vorteilhafterweise durch feinverteilte, nanoskalige Al₂O₃-Partikel erzeugt. Dadurch wird ein homogene Verteilung des Dotierstoffs gewährleistet. Pyrogen hergestellte Al₂O₃-Partikel mit einer großen spezifischen Oberfläche sind hierfür besonders gut geeignet.

In einer ersten bevorzugten Ausführungsform besteht das Granulat aus abgerundeten SiO₂-Kömem. Ein derartiges Granulat, das sich durch gute Rieselfähigkeit, hohe Stampfdichte und geringe Schwindung beim Verglasen auszeichnet, wird zum Beispiel durch Aufbaugranulation (Naßgranulierungsverfahren) erhalten.

In einer zweiten, gleichermaßen bevorzugten Ausführungsform ist das Granulat ein Extrudat. Ein derartiges Granulat ist kostengünstig durch Extrusionsverfahren herstellbar. Es zeichnet sich durch langgestreckte SiO₂-Körner aus, die auch langgesteckte Hohlräume enthalten können.

Das erfindungsgemäße Granulat ist für die Herstellung eines Bauteils aus hitzebeständigem, opakem Quarzglas, wie Hitzeschilden, Reaktionsgefäßen oder Muffeln besonders geeignet.

Ein derartiges Bauteil zeichnet sich dadurch aus, daß es eine Zone aus opakem Quarzglas aufweist, die aus einem synthetischen SiO₂-Granulat mit einer spezifischen Oberfläche (nach BET) im Bereich von 0,5 m²/g bis 40 m²/g und mit einer Stampfdichte von mindestens 0,8 g/cm³, das aus mindestens teilweise porösen Agglomeraten von SiO₂-Primärteilchen gebildet ist, hergestellt ist.

Durch Verglasen einer entsprechenden Schüttung des Granulats wird die opake Zone erhalten. Diese zeichnet sich durch hohe Opazität im IR-Bereich aus. Dies wird im wesentlichen dadurch erreicht, daß die Zone aus einem SiO₂-Granulat hergestellt ist, das aus teilweise porösen Agglomeraten von SiO₂-Primärteilchen gebildet wird, und das eine spezifische Oberfläche (nach BET) von 10 m²/g bis 34 m²/g aufweist. Durch Verglasen eines derartigen SiO₂-Granulats wird opakes Quarzglas erhalten, das eine homogene Porenverteilung bei gleichzeitig hoher Dichte aufweist. Dadurch wird beim bestimmungsgemäßen Einsatz des Bauteils eine besonders hohe Wärmeisolierung erreicht. Beim Granulieren bilden sich durch Zusammenlagerungen der feinteiligen Primärteilchen Agglomerate mit größerem Durchmesser. Diese weisen eine Vielzahl offener Porenkanäle auf, die einen dementsprechend großen Porenraum bilden. Die einzelnen Körner eingesetzten SiO₂-Granulats werden aus derartigen Agglomeraten gebildet. Beim Verglasen schließt sich der größte Teil des Porenraums durch Sintern und Kollabieren. Von den vorher offenen Porenkanälen bleibt jedoch eine Vielzahl feiner, geschlossener Poren, an denen IR-Strahlung rückgestreut wird, was die hohe Opazität der opaken Zone im IR-Bereich erzeugt.

Nachfolgend wird die Erfindung anhand von Ausführungsbeispielen und einer Zeichnung näher erläutert. In der Zeichnung zeigen in schematische Darstellung im einzelnen:
- **Figur 1**: den Verfahrensschritt des Verglasens am Beispiel der Herstellung eines Hohlzylinders,
- **Figur 2**: eine erste Ausführungsform des erfindungsgemäßen SiO₂-Granulats anhand eines Querschnitts durch ein einzelnes SiO₂-Korn, und
- **Figur 3**: eine zweite Ausführungsform des erfindungsgemäßen SiO₂-Granulats in Form von Sprühgranulat anhand eines Querschnitts durch ein Sprühkom.

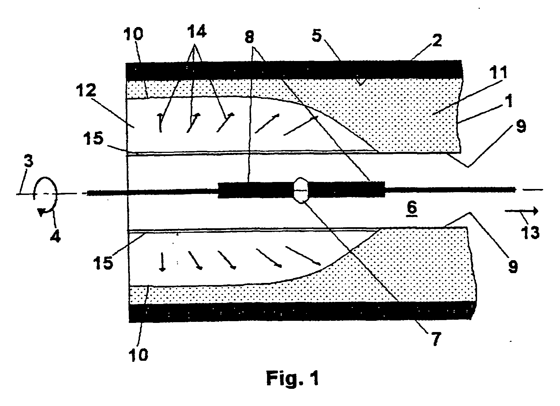

In **Figur 1** ist schematisch das erfindungsgemäße Verfahren zur Herstellung von opakem Quarzglas in Form eines opaken Formkörpers durch Verglasens eines zunächst porösen Hohlzylinders 1 dargestellt. Im folgenden wird zunächst die Herstellung des Hohlzylinders 1 näher erläutert:

SiO₂-Granulat mit einer spezifischen BET-Oberfläche von 34 m²/g und einer Stampfdichte von 1,1 g/cm³ wird in eine rohrförmige Metallform 2 eingefüllt, die um ihre Längsachse 3 rotiert. Die Rotationsrichtung ist in Figur 1 mit dem Richtungspfeil 4 gekennzeichnet. Unter der Wirkung der Zentrifugalkraft und Zuhilfenahme einer Schablone wird aus der Schüttung an der Innenwandung 5 der Metallform 2 ein rotationssymmetrischer Hohlzylinder 1 geformt. Der Hohlzylinder 1 hat in der Schüttung eine Schichtdicke von ca. 100 mm, und eine Innenbohrung 5 in Form einer Durchgangsbohrung 6 mit einem Innendurchmesser von etwa 73 mm. Durch die Zentrifugalkraft wird die Schüttung vor Durchführung der nachfolgenden Verfahrensschritte leicht verfestigt.

Zur Herstellung des opaken Formkörpers wird der mechanisch vorverdichtete Hohlzylinder 1 anschließend mittels eines Lichtbogens 7 von der Innenbohrung 6 des Hohlzylinders 1 aus zonenweise geschmolzen. Hierzu wird von einem Ende des Hohlzylinders 1 beginnend ein Elektrodenpaar 8 in die Innenbohrung 6 eingeführt und zum gegenüberliegenden Ende des Hohlzylinders 1 hin und kontinuierlich entlang der Innenwandung 9 bewegt. Die Vorschubgeschwindigkeit des Elektrodenpaares 8 wird auf 55 mm/min eingestellt. Durch die Temperatur des Lichtbogens 7 wird der Hohlzylinder 1 verglast. An der Innenwandung des Hohlzylinders 1 wird eine Maximaltemperatur von über 2100°C erreicht. Dabei bildet sich im Hohlzylinder 1 eine nach außen, in Richtung der Metallform 2 fortschreitende Verglasungsfront 10, die die Grenzfläche zwischen dem noch offenporigen Bereich 11 des Hohlzylinders 1 und einem bereits teilweise geschmolzenen, opaken Bereich 12 des Hohlzylinders 1 bildet. Die Bewegungsrichtung 13 der Verglasungsfront 10, die - durch die Vorschubgeschwindigkeit des Elektrodenpaares 8 überlagert - im wesentlichen radial von der Innenwandung 9 der Innenbohrung 6 nach außen gerichtet ist, wird in Figur 1 schematisch anhand der Richtungspfeile 14 charakterisiert. Die im SiO₂-Granulat eingeschlossenen Gase führen der zur Porenbildung im opaken Bereich 12, wodurch die gewünschte Opazität erzeugt wird. Die Dichte des Hohlzylinders beträgt 2,10 g/cm³, der Innendurchmesser 140 mm, die Wandstärke 22 mm.

Der Bereich der Innenwandung 9 der Innenbohrung 6 wird bei diesem Verfahren aufgrund der hohen Temperatur des Lichtbogens 7 stark verdichtet. Dadurch erhält der geschmolzene Formkörper 12 eine innere Oberflächenschicht 15, die aus transparentem Quarzglas hoher Dichte besteht. Der so hergestellte rohrförmige Formkörper 12 aus opakem Quarzglas wird zu einer hochtemperaturfesten Muffel verarbeitet.

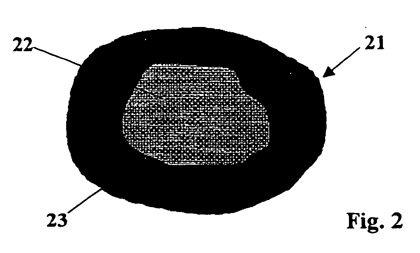

Das für die Durchführung des beschriebenen Verfahrens eingesetzte SiO₂-Granulat wird nachfolgend anhand **Figur 2** näher beschreiben. In Figur 2 ist schematisch ein einzelnes, typisches Korn 21 des eingesetzten Granulats dargestellt. Bei dem rundlichen Granulat-Korn 21 aus porösem Quarzglas ist ein zentraler Bereich 22 geringerer Dichte von einer Außenschicht 23 mit höherer Dichte umgeben. Die Dichte im zentralen Bereich beträgt etwa 40 % der Dichte von transparentem Quarzglas, in der Außenschicht beträgt sie etwa 60% davon. Die Grenzfläche zwischen zentralem Bereich 22 und Außenschicht 23 ist fließend. Der KornDurchmesser beträgt 420 µm, die Dicke der Außenschicht 23 etwa 100 µm.

Die Herstellung des Granulats erfolgt mittels eines üblichen Naßgranulierverfahrens unter Einsatz eines Mischers. Aus amorphen, nanoskaligen, durch Flammenhydrolyse von SiCl₄ erzeugten, pyrogenen SiO₂-Partikeln, die eine spezifische Oberfläche (nach BET) von 60 m²/g aufweisen, wird eine wäßrige Suspension hergestellt, der unter fortwährendem Rühren Feuchtigkeit entzogen wird, bis diese unter Bildung einer körnigen Masse zerfällt. Nach dem Trocknen liegt die spezifische Oberfläche (nach BET) des so erhaltenen Granulats bei 50 m²/g, wobei die rundlichen Granulat-Körner Durchmesser im Bereich zwischen 160 µm und 1000 µm aufweisen. Das SiO₂-Granulat wird anschließend im Durchlauf bei einer Temperatur von ca. 1200 °C in chlorhaltiger Atmosphäre thermisch vorverdichtet. Dabei wird das Granulat gleichzeitig gereinigt, wobei die Reinigung mittels Chlor besonders effektiv ist, da die Oberfläche der SiO₂-Partikel über die Porenkanäle für das Reinigungsgas zugänglich ist und die gasförmigen Verunreinigungen leicht entfernt werden können. Der Durchsatz beträgt hierbei 10 kg/h. Dabei bildet sich in den einzelnen Granulat-Körnern ein Temperaturgradient aus, der zu den unterschiedlichen Dichten von zentralem Bereich 22 und Außenschicht 23 führt.

Das nach dieser Vorbehandlung erhaltene SiO₂-Granulat zeichnet sich durch eine spezifische BET-Oberfläche von 34 m²/g und eine Stampfdichte von 1,1 g/cm³ aus. Der mittlere Korndurchmesser liegt bei etwa 420 µm, wobei darauf geachtet wird, daß ein Feinanteil mit einem Durchmesser unterhalb von 100 µm - der hier jedoch herstellungsbedingt nicht vorliegt - vor dem Einsatz zur Herstellung von opakem Quarzglas entfernt wird. Der Gesamtgehalt der Verunreinigungen an Li, Na, K, Mg, Ca, Fe, Cu, Cr, Mn, Ti, und Zr beträgt weniger als 200 Gew.-ppb.

Das so hergestellte Granulat aus amorphen, nanoskaligen SiO₂-Partikeln kann - wie anhand Figur 1 beschreiben - zur Herstellung von opakem Quarzglas eingesetzt werden. Aufgrund dessen, daß die einzelnen Granulat-Körner durch Zusammenlagerung einer Vielzahl von Primärteilchen gebildet sind, die eine sehr geringe Teilchengröße haben, wird beim Verglasen eine entsprechend feine und homogene Porenverteilung ermöglicht, wie dies weiter oben näher beschreiben ist.

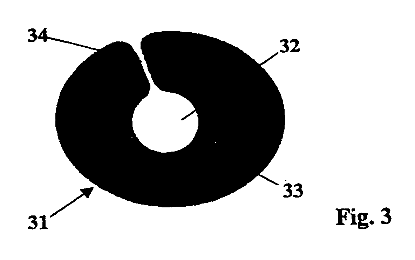

In **Figur 3** ist schematisch ein einzelnes Sprühkorn 31 dargestellt. Dieses ist typisch für ein Sprühgranulat, das für die Durchführung des oben anhand Figur 1 beispielhaft beschriebenen Verfahrens ebenfalls geeignet ist. Das typische Sprühkom 31 liegt als Agglomerat von SiO₂-Primärteilchen vor. Es weist einen Hohlraum 32 auf, der einer Außenschicht 33 umgeben ist. Auf der Außenschicht 33 ist ein Einzugstrichter ausgebildet, der in einem engen Kanal 34 in den Hohlraum 32 mündet. Der Außendurchmesser des Sprühkoms 31 beträgt etwa 300 µm und die Dicke der Außenschicht 33 etwa 100 µm.

Im folgenden wird die Herstellung diese Sprühgranulats näher beschrieben:

Hochreine, pyrogene, nanoskalige SiO₂-Primärteilchen mit einer spezifischen Oberfläche (nach BET) von 70 m²/g werden in deionisiertem Wasser dispergiert. Es werden 12 Gew.-ppm Aluminium in Form von pyrogenem Al₂O₃ hinzugegeben. Die Suspension wird dabei auf ein Litergewicht von 1380 g/l eingestellt. Die Schlickerviskosität beträgt 450 mPas. Unter Einsatz eines handelsüblichen Sprühtrockners (Firma Dorst, Typ D400) wird die Suspension bei einer Heißlufttemperatur von 380 °C und einem Schlickerdruck von 10,5 bar versprüht. Dabei wird ein Sprühgranulat mit einem mittleren Komdurchmesser von 330 µm und einer Restfeuchte von 0,3% erhalten. Die spezifische Oberfläche (nach BET) beträgt 54 m²/g und das Schüttgewicht liegt bei 0,6 g/cm³. Das Granulat wird anschließend bei 1200 °C im Durchlauf mit einem Durchsatz von 6,1 kg/h in einem HCl/Cl₂-Gasgemisch gereinigt und thermisch verfestigt.

Die spezifische BET-Oberfläche beträgt nach dieser Behandlung 20 m²/g, die Schüttdichte 0,8 g/cm³ und die Stampfdichte 0,92 g/cm³. Der Feinanteil mit einem Durchmesser unterhalb von 100 µm wird hier herstellungsbedingt bereits bei der Sprühgranulation mittels eines Zyklons abgetrennt. Der Gesamtgehalt der Verunreinigungen an Li, Na, K, Mg, Ca, Fe, Cu, Cr, Mn, Ti und Zr beträgt weniger als 200 Gew.-ppb.

Das so hergestellte Sprühgranulat aus amorphen, nanoskaligen SiO₂-Partikeln kann wie anhand Figur 1 beschreiben, zur Herstellung von opakem Quarzglas eingesetzt werden. Aufgrund dessen, daß die einzelnen Sprühkömer durch Zusammenlagerung einer Vielzahl von Primärteilchen gebildet sind, die eine sehr geringe Teilchengröße haben, wird beim Verglasen eine entsprechend feine und homogene Porenverteilung ermöglicht. Dies wird noch dadurch erleichtert, daß durch den Hohlraum 32 ein zusätzlicher, nahezu abgeschlossener Gasraum gebildet wird, der beim Verglasen zumindest teilweise erhalten bleibt, weil das eingeschlossene Gas während des Verglasens nur zum Teil entweichen kann und so zu Porenbildung und Opazität des Quarzglases beiträgt.

## Patentansprüche

1. Verfahren für die Herstellung von opakem Quarzglas, wobei ein Formling aus synthetischer SiO₂-Körnung geformt und bei einer Verglasungstemperatur unter Bildung eines Formkörpers aus opakem Quarzglas erhitzt wird, und wobei als SiO₂-Körnung ein aus mindestens teilweise porösen Agglomeraten von SiO₂-Primärteilchen gebildetes SiO₂-Granulat (21; 31) mit einer spezifischen Oberfläche (nach BET) zwischen 10 m²/g und 34 m²/g, und einer Stampfdichte im Bereich zwischen 0,9 g/cm³ und 1,1 g/cm3 eingesetzt wird und das Granulat (21; 31) aus SiO₂-Körnern mit inhomogener Dichteverteilung besteht, bei denen ein Innenbereich (22; 32) geringerer Dichte mindestens teilweise von einem Außenbereich (23; 33) höherer Dichte umschlossen ist.

2. Verfahren nach Anspruch 1, **dadurch gekennzeichnet, daß** der Außenbereich (23; 33) durch eine thermische Behandlung, die ein Sintern bei einer Temperatur im Bereich von 800°C bis 1450°C umfaßt, verdichtet wird.

3. Verfahren nach Anspruch 1 oder 2, **dadurch gekennzeichnet, daß** die thermische Behandlung ein Erhitzen bei einer Temperatur zwischen 1000°C und 1300 C unter stickstoffhaltiger Atmosphäre und in Gegenwart von Kohlenstoff erfolgt.

4. Verfahren nach einem der vorhergehenden Ansprüche, **dadurch gekennzeichnet, daß** ein Formling (1) gebildet wird, der eine um eine Rotationsachse (3) verlaufende Innenoberfläche (9) aufweist, und daß das Erhitzen des Formlings (1) derart erfolgt, daß eine Verglasungsfront (10) von der Innenoberfläche (9) nach außen fortschreitet.

5. Verfahren nach Anspruch 4, **dadurch gekennzeichnet, daß** der Formling (1) unter Rotation um die Rotationsachse (3) von der Innenoberfläche (9) aus mittels eines Lichtbogens (7) zonenweise auf eine Verglasungstemperatur oberhalb von 1900°C erhitzt wird.

6. SiO₂-Granulat zur Durchführung des Verfahrens nach einem der Ansprüche 1 bis 5, gebildet aus mindestens teilweise porösen Agglomeraten von SiO₂-Primärteilchen, wobei das Granulat (21; 31) eine spezifische Oberfläche (nach BET) zwischen 10 m²/g und 34 m²/g, und eine Stampfdichte im Bereich zwischen 0,9 g/cm³ und 1,1 g/cm³ aufweist und aus SiO₂-Körnern mit inhomogener Dichteverteilung besteht, bei denen ein Innenbereich (22; 32) geringerer Dichte mindestens teilweise von einem Außenbereich (23; 33) höherer Dichte umschlossen ist.

7. Granulat nach Anspruch 6, **dadurch gekennzeichnet, daß** der Innenbereich (32) einen Hohlraum umfaßt.

8. Granulat nach Anspruch 6 oder 7, **dadurch gekennzeichnet, daß** die Primärteilchen eine stickstoffhaltige Oberflächenschicht aufweisen.

9. Granulat nach einem der Ansprüche 6 bis 8, **dadurch gekennzeichnet, daß** es aus SiO₂-Körnern besteht, die im Bereich zwischen 5 Gew.-ppm und 20 Gew.-ppm mit Aluminium dotiert sind.

10. Granulat nach Anspruch 9, **dadurch gekennzeichnet, daß** die Aluminium-Dotierung in Form von feinverteilten, nanoskaligen Al₂O₃-Partikeln vorliegt.

11. Granulat nach einem der Ansprüche 6 bis 10, **dadurch gekennzeichnet, daß** das Granulat als Extrudat ausgebildet ist.

12. Bauteil aus Quarzglas, **dadurch gekennzeichnet, daß** es eine Zone aus opakem Quarzglas aufweist, die aus einem synthetischen SiO₂-Granulat (21; 31) mit einer spezifischen Oberfläche (nach BET) zwischen 10 m²/g und 34 m²/g, und mit einer Stampfdichte im Bereich zwischen 0,9 g/cm³ und 1,1 g/cm³ gebildet ist, wobei das Granulat (21; 31) aus SiO₂-Körnern mit inhomogener Dichteverteilung besteht, bei denen ein Innenbereich (22; 32) geringerer Dichte mindestens teilweise von einem Außenbereich (23; 33) höherer Dichte umschlossen ist, hergestellt ist.

## Claims

1. A method for producing opaque quartz glass, wherein a preform is formed from synthetic SiO₂ granules and heated at a vitrification temperature with formation of a shaped body of opaque quartz glass, and wherein the SiO₂ granules are an SiO₂ granulate (21; 31) formed from at least partly porous agglomerates of SiO₂ primary particles and having a specific BET surface area between 10 m²/g and 34 m²/g and an apparent density ranging from 0.9 g/cm³ to 1.1 g/cm³, and the granulate (21; 31) consists of SiO₂ granules of an inhomogeneous density distribution in which an inner region (22; 32) of lower density is enclosed at least in part by an outer region (23; 33) of higher density.

2. The method according to claim 1, **characterized in that** the outer region (23; 33) is compacted by thermal treatment comprising sintering at a temperature ranging from 800°C to 1450°C.

3. The method according to claim 1 or 2, **characterized in that** the thermal treatment comprises heating at a temperature between 1000°C and 1300°C in a nitrogen-containing atmosphere and in the presence of carbon.

4. The method according to any one of the preceding claims, **characterized in that** a preform (1) is formed which comprises an inner surface (9) extending about an axis of rotation (3), and heating of the preform (1) is carried out such that a vitrification front (10) progresses from the inner surface (9) to the outside.

5. The method according to claim 4, **characterized in that** the preform (1) is heated under rotation about a rotation axis (3) from the inner surface (9) by means of an electric arc (7) zone by zone to a vitrification temperature above 1900°C.

6. An SiO₂ granulate for performing the method according to any one of claims 1 to 5, formed from at least partly porous agglomerates of SiO₂ primary particles, wherein the granulate (21; 31) has a specific BET surface area between 10 m²/g and 34 m²/g, and an apparent density ranging from 0.9 g/cm³ to 1.1 g/cm³, and consists of SiO₂ granules of an inhomogeneous density distribution in which an inner region (22; 32) of lower density is enclosed at least in part by an outer region (23; 33) of higher density.

7. The granulate according to claim 6, **characterized in that** the inner region (32) comprises a hollow space.

8. The granulate according to claim 6 or 7, **characterized in that** the primary particles have a nitrogen-containing surface layer.

9. The granulate according to any one of claims 6 to 8, **characterized in that** it consists of SiO₂ granules which are doped with aluminum in the range between 5 wt ppm and 20 wt ppm.

10. The granulate according to claim 9, **characterized in that** the aluminum doping is present in the form of finely distributed nanoscale Al₂O₃ particles.

11. The granulate according to any one of claims 6 to 10, **characterized in that** the granulate is formed as an extrudate.

12. A component of quartz glass, **characterized in that** it comprises a zone of opaque quartz glass which is formed from a synthetic SiO₂ granulate (21; 31) having a specific BET surface area between 10 m²/g and 34 m²/g and an apparent density ranging from 0.9 g/cm³ to 1.1 g/cm³, the granulate (21; 31) consisting of SiO₂ granules of an inhomogeneous density distribution in which an inner region (22; 32) of lower density is enclosed at least in part by an outer region (23; 33) of higher density.

## Revendications

1. Procédé pour la fabrication de verre de quartz opaque, une ébauche en granulé de SiO₂ synthétique étant formée et étant chauffée à une température de vitrification en formant un corps moulé en verre de quartz opaque, et en tant que granulé de SiO₂ étant utilisé un granulat de SiO₂ (21; 31) composé au moins partiellement d'agglomérats poreux de particules primaires de SiO₂ avec une surface spécifique (selon BET) comprise entre 10 m²/g et 34m²/g et une densité de remplissage à l'état tassé comprise entre 0,9 g/cm³ et 1,1 g/cm3 et le granulat (21; 31) se composant de grains SiO₂ avec une répartition inhomogène de densité, où une zone interne (22, 32) de densité plus faible est entourée au moins partiellement par une zone externe (23; 33) de densité plus élevée.

2. Procédé selon la revendication 1, **caractérisé en ce que** la zone externe (23; 33) est densifiée par un traitement thermique qui comprend un frittage à une température comprise entre 800°C et 1450°C.

3. Procédé selon la revendication 1 ou 2, **caractérisé en ce que** le traitement thermique effectue un chauffage à une température comprise entre 1000°C et 1300°C sous une atmosphère azotée et en présence de carbone.

4. Procédé selon l'une des revendications précédentes, **caractérisé en ce qu'**une ébauche (1) est formée qui présente une surface intérieure (9) s'étendant autour d'un axe de rotation (3) et **en ce que** le chauffage de l'ébauche (1) s'effectue de sorte qu'un front de vitrification (10) progresse vers l'extérieur depuis la surface interne (9).

5. Procédé selon la revendication 4, **caractérisé en ce que** l'ébauche (1) est chauffée à une température de vitrification supérieure à 1900°C par zone en tournant autour de l'axe de rotation (3) depuis la surface interne (9) au moyen d'un arc électrique (7).

6. Granulat de SiO₂ pour la mise en oeuvre du procédé selon l'une des revendications 1 à 5, composé par au moins des agglomérats partiellement poreux de particules primaires de SiO₂, le granulat (21; 31) présentant une surface spécifique (selon BET) entre 10 m²/g et 34 m²/g et une densité de remplissage comprise entre 0,9 g/cm³ et 1,1 m²/g et se composant de grains de SiO₂ avec une répartition inhomogène de la densité, où une zone interne (22,32) de densité moindre est entourée au moins partiellement par une zone externe (23; 33) de densité plus élevée.

7. Granulat selon la revendication 6, **caractérisé en ce que** la zone interne (32) comprend une cavité creuse.

8. Granulat selon la revendication 6 ou 7, **caractérisé en ce que** les particules primaires présentent une couche de surface azotée.

9. Granulat selon l'une des revendications 6 à 8, **caractérisé en ce qu'**il se compose de grains de Si02 qui sont dopés à l'aluminium entre 5 ppm en poids et 20 ppm en poids.

10. Granulat selon la revendication 9, **caractérisé en ce que** le dopage d'aluminium se trouve sous forme de particules Al₂O₃ réparties finement à l'échelle nanométrique.

11. Granulat selon l'une des revendications 6 à 10, **caractérisé en ce que** le granulat est réalisé comme un extrudat.

12. Composant en verre de quartz, **caractérisé en ce qu'**il présente une zone de verre de quartz opaque qui se compose d'un granulat synthétique SiO₂ (21; 31) avec une surface spécifique (selon BET) comprise entre 10m²/g et 34m²/g et avec une densité de remplissage comprise entre 0,9 g/cm³ et 1,1 g/cm³, le granulat (21; 31) se composant de grains de SiO₂ avec une répartition inhomogène de la densité, où une zone interne (22,32) de densité moindre est entourée au moins partiellement par une zone externe (23; 33) de densité plus élevée.
